# DEMANDE DE BREVET EUROPEEN

(11) **EP 1 777 354 A1**
(43) Date de publication de la demande: **25.04.2007**
(21) Numéro de dépôt: 05109681.6
(22) Date de dépôt: 18.10.2005
(51) Int. Cl.: E04B 1/26, E04B 1/24, E04B 1/38, E04B 1/58

(54) **Elément de construction**

(71) Demandeur: ISA FRANCE S.A., 25130 Villers-le-Lac (FR)
(72) Inventeur: Tirole, Nicolas, 25130, Villers-le-Lac (FR)
(74) Mandataire: GLN

(57) **Abrégé**

Pour permettre le positionnement aisé de parois sur des montants formant une structure de construction, la présente invention propose un élément de construction (10) comportant:
- une base (12) munie d'une première face (14), et présentant une première tranche dont la forme définit une première partie mâle (22, 24), et une deuxième tranche opposée à la première en référence à ladite première face et dont la forme définit une première partie femelle, lesdites premières parties mâle et femelle étant disposées selon une première direction, et
- une surépaisseur (18) solidaire de ladite première face et présentant une première tranche dont la forme définit une deuxième partie mâle (30) et une deuxième tranche dont la forme définit une deuxième partie femelle (20), lesdites deuxièmes parties mâle et femelle étant situées selon ladite première direction,
la première partie mâle ayant un profil susceptible d'épouser celui de la deuxième partie femelle,
la deuxième partie mâle ayant un profil susceptible d'épouser celui de la première partie femelle.

## Description

### Domaine technique

La présente invention se rapporte au domaine de la construction de bâtiments. Elle se rapporte, plus particulièrement, à des éléments destinés à positionner des parois en référence à des piliers formant une structure. Avantageusement, ces éléments sont utilisables dans la construction de bâtiments en bois.

### Etat de la technique

Selon certaines techniques de construction, notamment pour la construction de maison en bois, l'homme du métier dispose et assemble des montants qui forment la structure du bâtiment, puis positionne et fixe des parois sur ces montants. Les différentes pièces sont bien sûr dimensionnées les unes par rapport aux autres et il est primordial que les parois soient positionnées avec précision sur les montants. Or, les dimensions et le poids des parois rendent leur manipulation malaisée. De fait, il est difficile de disposer avec précision les parois au moment de leur fixation.

L'homme du métier a donc besoin de moyens de positionnement permettant de garantir que les parois sont disposées correctement par rapport aux montants avant ou au moment de les fixer définitivement les uns aux autres.

A ce jour, il n'existe pas sur le marché, à la connaissance de la demanderesse, d'organes spécialement prévus pour assurer le positionnement de parois sur les montants formant la structure. Ces organes étant particulièrement nécessaires dans le domaine, l'homme du métier s'accommode d'outils de construction de type à queue d'aronde, normalement destinés à assurer à long terme, la fixation d'objets divers. Par exemple, le dispositif décrit dans la demande de brevet EP 1 288 508 peut être utilisé dans le but expliqué ci-dessus. Toutefois, un tel dispositif est conçu pour supporter, pour une longue période et en toute sécurité, des éléments lourds. Ainsi, tant les dimensions que les matériaux choisis pour le réaliser renchérissent considérablement leur prix.

Or, dans le domaine des constructions en bois, les moyens de fixation sont spécifiques (chevillage, vissage...) et il est superflu que les organes de positionnement permettent d'assurer la fixation des éléments.

De plus, les dispositifs de l'état de la technique comportent une pièce mâle et une pièce femelle, asymétriques, nécessitant donc, au niveau de leur fabrication, deux procédés de production différents et indépendants.

La présente invention a pour but de proposer des éléments de construction particulièrement adaptés pour assurer une fonction de positionnement des parois en référence aux montants qui forment la structure de la construction.

### Divulgation de l'invention

De façon plus précise, l'invention concerne un élément de construction comportant une base munie d'une première face, et présentant une première tranche dont la forme définit une première partie mâle, et une deuxième tranche opposée à la première en référence à la première face et dont la forme définit une première partie femelle. Les premières parties mâle et femelle sont disposées selon une première direction.

L'élément de construction comporte, en outre, une surépaisseur solidaire de la première face et présentant une première tranche dont la forme définit une deuxième partie mâle, et une deuxième tranche dont la forme définit une deuxième partie femelle, les deuxièmes parties mâle et femelle étant situées selon la première direction évoquée ci-dessus.

Avantageusement, le profil de la première partie mâle est susceptible d'épouser celui de la deuxième partie femelle, et le profil de la deuxième partie mâle est susceptible d'épouser celui de la première partie femelle.

Selon un premier mode de réalisation, les première et deuxième parties mâles sont situées d'un même côté de la première direction, et les première et deuxième parties femelles sont toutes deux situées du côté opposé.

Dans ce premier mode de réalisation, la surépaisseur définit sur la première face de la base:
- une première surface comprise entre son contour et celui de la première partie mâle, et
- une deuxième surface comprise entre son contour et celui de la première partie femelle.

Ces première et deuxième surfaces sont superposables l'une à l'autre.

### Brève description des dessins

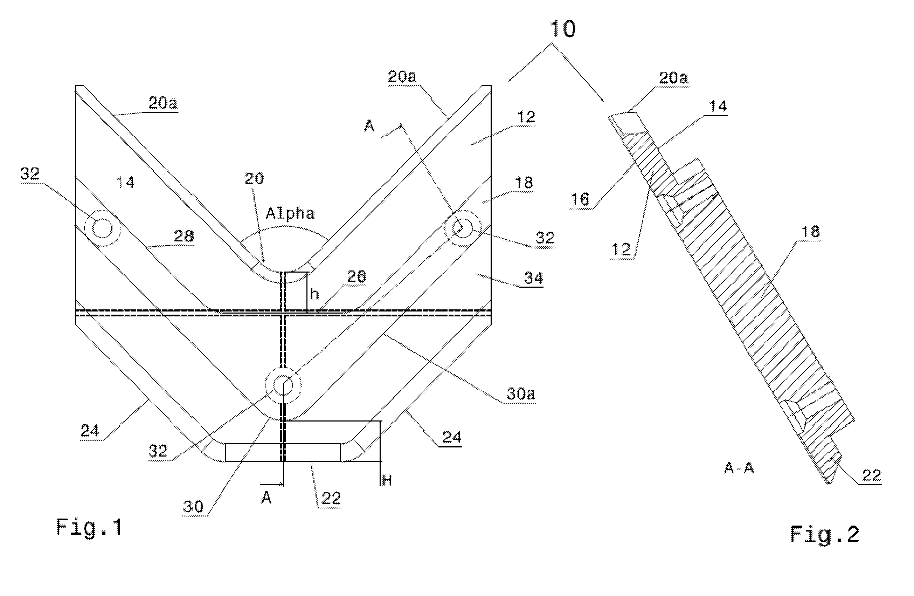

Le dessin annexé pour illustrer la description qui suit, proposée à titre d'illustration non limitative de l'invention, représente:
- aux figures 1 et 2 respectivement, des vues de face et en coupe selon A-A d'un élément selon l'invention,
- la figure 3 montre, en perspective, deux éléments prêts à être assemblés,
- la figure 4 montre la disposition de deux éléments sur une paroi et sur un montant en vue de leur assemblage,
- la figure 5 représente un élément selon un deuxième mode de réalisation, et
- les figures 6 et 7 illustrent l'assemblage de deux éléments selon ce deuxième mode de réalisation.

### Mode(s) de réalisation de l'invention

Les figures 1 et 2 représentent un élément de construction 10 selon l'invention. Comme on le comprendra par la suite, les éléments 10 sont conçus pour être utilisés par paire d'éléments identiques.

Chaque élément 10 comporte une base 12, définissant deux faces principales, une première 14 orientée du côté destiné à être en appui sur l'objet (paroi ou montant de structure) sur lequel il va être fixé, et une deuxième 16, visible par l'utilisateur lorsque l'élément est fixé.

L'élément 10 est inscriptible dans un rectangle de référence. On définira, dans le seul but de clarifier la description suivante:
- le côté supérieur comme étant celui destiné à être dirigé vers le ciel lors de son utilisation dans une construction,
- le côté inférieur comme étant le côté opposé au côté supérieure, et
- l'épaisseur comme étant la dimension qui sépare les faces 14 et 16.

La première face 14 est dotée d'une surépaisseur 18 dont l'épaisseur est supérieure à celle de la base 12. L'avantage procuré par ce dimensionnement sera explicité ci-après, lors de la description de l'assemblage d'une paire d'éléments.

Dans l'exemple décrit, la tranche de la base est ouverte, du côté supérieur, par une rainure en V 20 disposée symétriquement par rapport à l'élément 10 et définissant des parois 20a. La rainure 20 forme une première partie femelle.

L'angle α défini par les parois 20a est dimensionné pour que la rainure occupe une partie maximale du côté supérieur, sans pour autant former des pointes aux coins de l'élément, qui pourraient être fragiles, voire dangereuses. Comme on le comprendra par la suite, la rainure 20 a une fonction de positionnement axial d'un élément par rapport à un autre.

L'homme du métier pourra choisir une autre forme pour la rainure 20. Par exemple, l'angle α peut être plus ou moins aigu, la rainure peut ne pas être symétrique par rapport à l'élément ou pourrait même ne pas être en forme de V, mais la fonction de positionnement axial et l'utilisation des éléments sont optimales dans la configuration en V symétrique décrite ci-dessus.

De manière avantageuse, les parois 20a sont biseautées, le biseau, bien visible sur la figure 2, étant orienté du côté de la première face 14.

La pièce présente, dans sa tranche située du côté inférieur, une assise 22 et deux ailes obliques 24, symétriques par rapport à l'élément, formées par la suppression des deux coins inférieurs du rectangle de référence. Les ailes 24 sont parallèles aux parois 20a de la rainure 20.

L'assise 22 et les ailes 24 sont, à l'instar des parois 20a, biseautées du côté de la première face 14, et forment une première partie mâle.

La surépaisseur 18 est également inscriptible dans un deuxième rectangle de référence. Sa tranche située du côté supérieur est le négatif du côté inférieur de la base 12, c'est-à-dire qu'il comporte une assise 26 et deux ailes 28 dont les contours épousent ceux de l'assise 22 et des ailes 24. L'assise 26 et les ailes 28 forment une deuxième partie mâle.

La tranche du côté inférieur de la surépaisseur 18 est le négatif du côté supérieur de la base 12, c'est-à-dire qu'il comporte une pointe en V 30 dont les parois 30a épousent celles de la rainure en V du côté supérieur de la base 12. La pointe 30 forme une deuxième partie femelle.

Ainsi, les deuxièmes parties mâle et femelle sont situées dans la direction indiquée par les premières parties mâle et femelle. Particulièrement à l'exemple, les parties mâles d'une part et les parties femelles d'autre part sont situées du même côté de cette direction.

Les tranches de la surépaisseur 18 ne sont pas forcément biseautées, mais, si elles présentent un biseau, celui-ci est orienté à l'opposé du biseau des parois de la base, c'est-à-dire qu'il est orienté vers la deuxième face 16.

Ainsi, la première partie mâle est conformée pour épouser la deuxième partie femelle et la deuxième partie mâle est conformée pour épouser la première partie femelle.

La surépaisseur 18 définit sur la première face 14 une première surface comprise entre son contour et celui de la première partie mâle, hachurée verticalement sur la figure 1, et une deuxième surface comprise entre son contour et celui de la première partie femelle, hachurée horizontalement sur la figure 1. Selon une caractéristique importante de ce mode de réalisation, la première surface est superposable à la deuxième surface et inversement. On entend par "superposable" que les deux surfaces ont des contours sensiblement identiques.

Plus particulièrement, les première et deuxième surfaces sont superposables du fait que, si on appelle h la hauteur entre le fond de la rainure 20 de la base et l'assise 26 de la surépaisseur 18, et H la hauteur entre l'assise 22 du côté inférieur de la base le et l'extrémité de la pointe 30 de la surépaisseur 18, alors h=H. De plus, les parois 30a de la pointe 30 sont parallèles aux côtés 20a de la rainure 20, l'assise 22 est parallèle à et est de même dimension que l'assise 26, et les ailes 24 et 28 sont parallèles. De manière avantageuse, les quatre ailes sont de mêmes dimensions.

Ainsi, comme il va être expliqué ci-après, dans un assemblage, chaque élément peut jouer la fonction d'élément mâle ou d'élément femelle, il n'est donc pas besoin de prévoir la fabrication de deux éléments différents.

Chaque élément est percé d'au moins deux trous 32, traversant, de préférence pour plus de solidité, la base 12 et la surépaisseur 18. Dans l'exemple, l'élément 10 comporte trois trous 32, un disposé sur la ligne virtuelle qui joint le fond de la rainure 20 et le sommet de la pointe 30 et deux situés au niveau des ailes 28 de la structure 18.

Les trous se terminent, du côté de la première face, en une portion conique pour loger la tête des vis servant à la fixation des éléments.

En outre, la deuxième face est dotée de deux légères rainures 34 perpendiculaires, positionnées, respectivement, en vis-à-vis de l'assise 26 du côté supérieur de la surépaisseur 18 et de la ligne virtuelle qui joint le fond de la rainure 20 et le sommet de la pointe 30.

On notera que les éléments peuvent notamment être réalisés par moulage dans un plastique dur, tel un ABS (Acrylonitrile-Butadiène-Styrène) ou un PTFE (Poly-Tétrafluoroéthylène), ce dernier matériau permettant, en outre, un bon glissement d'un élément sur un autre, ce qui est avantageux lors de l'opération d'assemblage.

Les éléments 10 sont utilisés par paire d'éléments identiques, un premier élément 10A étant fixé sur une paroi 36 et un deuxième élément 10B sur un montant 38. Ils sont destinés à être imbriqués l'un dans l'autre, la base 12 de l'un coopérant avec la surépaisseur 18 de l'autre. Plus précisément, les première et deuxième parties mâles de l'un sont respectivement destinées à épouser les deuxième et première parties femelles de l'autre.

De manière plus précise et grâce au fait que les première et deuxièmes surfaces sont superposables, les portions suivantes sont destinées à coopérer les unes avec les autres:
- les côtés 20a de la rainure 20 de la base de l'élément 10B avec les parois 30a de la pointe 30 de la surépaisseur 18 de l'élément 10A; et
- les ailes 24 et l'assise 22 de la base de l'élément 10A avec, respectivement, les ailes 28 et l'assise 26 de la surépaisseur 18 de l'élément 10B.

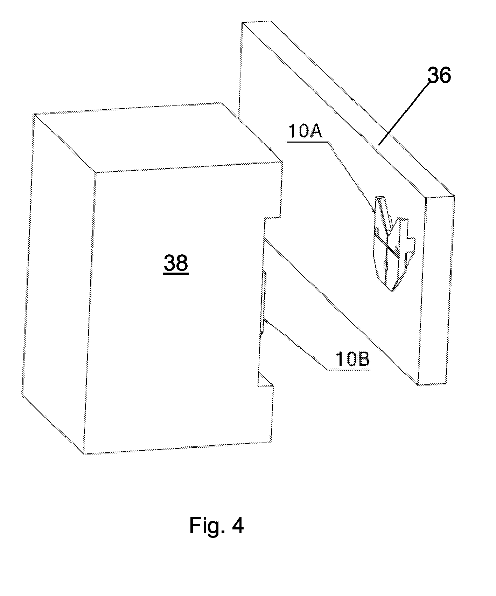

Les éléments 10A et 10B sont fixés par leur surépaisseur 18, à l'endroit choisi pour la construction, respectivement sur une paroi 36 et sur un montant 38 de la structure soutenant la paroi 36. Ils sont disposés dans des creusures dont la profondeur est sensiblement égale à l'épaisseur de la base 12 d'un élément 10. Comme illustré sur la figure 4, il est également possible que seul le montant (ou la paroi) comporte une creusure, dont la profondeur est alors sensiblement à l'épaisseur d'un élément 10. Les creusures sont dimensionnées pour permettre le déplacement relatif et l'imbrication des éléments 10A et 10B.

Naturellement, pour monter une paroi 36 d'une construction, il est préférable utiliser au moins deux paires d'éléments, chacune associant un montant 38 et une extrémité différente d'une même paroi 36. Mais il n'est pas nécessaire d'utiliser un nombre important d'éléments, puisqu'ils ne sont pas destinés à fixer définitivement la paroi 36 sur les montants 38.

Pour garantir la précision du positionnement des éléments 10, l'utilisateur se sert des rainures 34 qui lui permettent, notamment, d'ajuster, sans la voir, la position de l'assise 26 qui sert de référence pour l'assemblage des deux éléments. Une fois en place, les éléments sont fixés sur la paroi 36 et sur le montant 38 par des vis logées dans les trous 32.

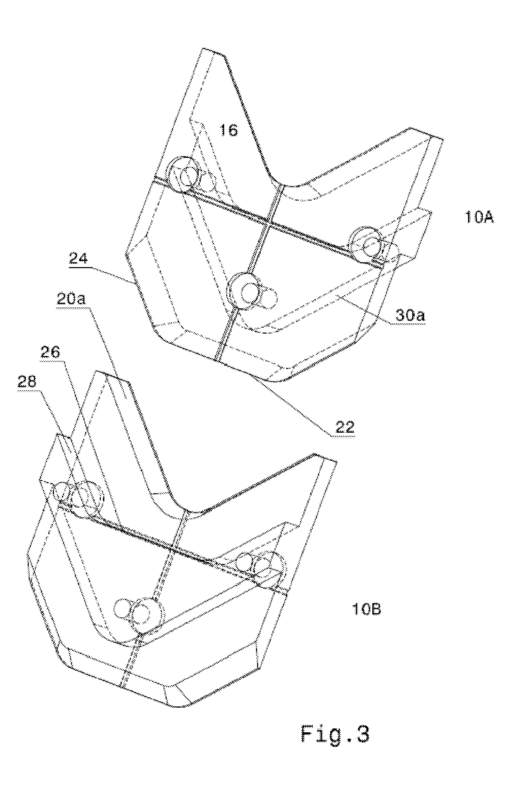

Ensuite, la paroi 36 équipée d'éléments 10A est approchée des montants 38, également équipés d'éléments 10B, de telle sorte que les éléments sont positionnés comme sur la figures 3, c'est-à-dire que les éléments 10A sont sensiblement à la verticale des éléments 10B et parallèles à eux. Puis, la paroi 36 est descendue et les éléments 10A jouant la fonction d'éléments mâles se rapprochent des éléments femelles 10B.

Si, lors de la descente, la paroi 36 est légèrement trop éloignée du montant 38, les biseaux de l'assise 22 et des ailes 24 viennent au contact de celui de la rainure 20, les faisant coulisser les uns sur les autres, entraînant un guidage transversal. La surépaisseur 18 de l'élément 10A est ainsi amenée au niveau de la base de l'élément 10B et inversement.

Grâce aux épaisseurs relatives de la base et de la surépaisseur, la base de l'élément 10A se trouve positionnée avec un léger jeu entre la base de l'élément 10B et le montant 38 sur lequel l'élément 10B est fixé. De la sorte, l'élément 10A ne se trouve pas coincé entre le montant 38 et la paroi 36, si cette dernière est amenée légèrement de biais.

Quand la pointe en V 30 de la surépaisseur 18 de l'élément 10A arrive au contact des côtés de la rainure 20 de l'élément 10B, la rainure remplit sa fonction de positionnement axial jusqu'à ce que, au fur et à mesure que les éléments 10A et 10B s'imbriquent l'un dans l'autre, la pointe 30 et le fond de la rainure 20 soient l'un en face de l'autre.

Grâce aux dimensionnements respectifs de la base et de la surépaisseur de chacun des éléments détaillées ci-dessus, lorsque la pointe 30 s'appuie au fond de la rainure 20, l'assise 22 de la base de l'élément 10A s'appuie simultanément sur l'assise de la surépaisseur de l'élément 10B.

Du fait du dimensionnement des creusures, lorsque la paroi 36 est positionnée sur les montants 38 de la structure par les éléments de 10A et 10B, la paroi 36 se trouve au contact des montants 38 et y est ensuite fixée de manière définitive par des moyens choisis par l'homme du métier, les éléments 10A et 10B restant à demeure dans la paroi 36 et les montants 38.

Il est bien évidemment possible d'inverser le positionnement des éléments 10A et 10B, c'est-à-dire que l'élément A situé sur la paroi 36 vient au contact de l'élément B situé sur le montant 38 par ses parties femelles.

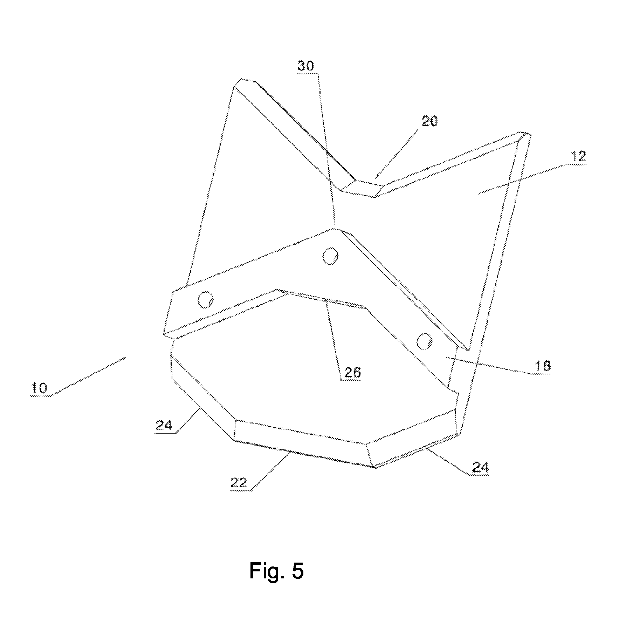

Dans une variante moins avantageuse mais utilisable et fonctionnelle, représentée sur la figure 5, la surépaisseur 18 est orientée de manière inversée par rapport au mode de réalisation ci-dessus. De manière plus précise, la partie mâle de la structure 18 est située du côté de la partie femelle de la base 12 et la partie femelle de la surépaisseur 18 est située du côté de la partie mâle de la base 12.

Le profil de la partie mâle de la base 12 est susceptible d'épouser celui de la partie femelle de la surépaisseur 18 et le profil de la partie mâle de la structure 18 est susceptible d'épouser celui de la partie femelle de la structure 12.

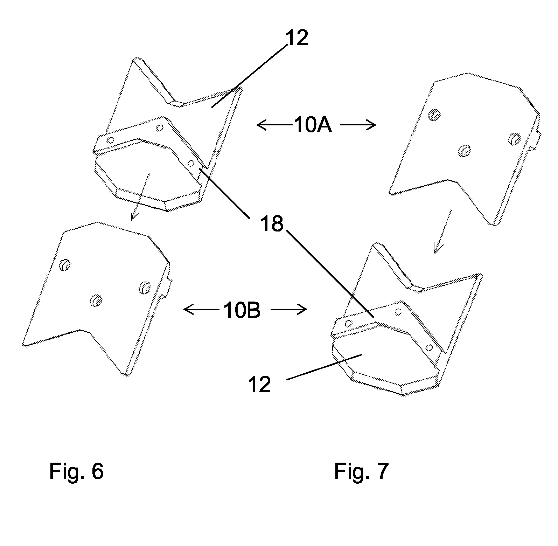

Dans cette variante et comme représenté aux figures 6 et 7, deux pièces 10A et 10B peuvent aussi être assemblées en faisant coopérer:
- la partie mâle de la surépaisseur 18 d'un premier élément avec la partie femelle de la base 12 d'un deuxième élément, et la partie femelle de la base 12 du premier élément avec la partie mâle de la surépaisseur 18 du deuxième élément, ou
- la partie femelle de la surépaisseur 18 d'un premier élément avec la partie mâle de la base 12 d'un deuxième élément, et la partie mâle de la base 12 du premier élément avec la partie femelle de la surépaisseur 18 du deuxième élément.

Dans ce deuxième mode de réalisation, il n'est pas nécessaire que les surfaces définies par la surépaisseur sur la première face 14 de la base soient superposables. Toutefois, la première variante permet d'optimiser l'encombrement des deux pièces, quel que soit le sens dans lequel elles sont utilisées.

Ainsi est proposé un élément de construction utilisable par paire et permettant un positionnement particulièrement précis d'une paroi sur des montants, pour un coût modique, notamment grâce au fait qu'un élément peut aussi bien être utilisé comme élément mâle que comme élément femelle et que les matériaux utilisés sont peu chers.

## Revendications

1. Elément de construction (10) comportant:
- une base (12) munie d'une première face (14), et présentant une première tranche dont la forme définit une première partie mâle (22, 24), et une deuxième tranche opposée à la première en référence à ladite première face et dont la forme définit une première partie femelle, lesdites premières parties mâle et femelle étant disposées selon une première direction, et
- une surépaisseur (18) solidaire de ladite première face et présentant une première tranche dont la forme définit une deuxième partie mâle (30) et une deuxième tranche dont la forme définit une deuxième partie femelle (20), lesdites deuxièmes parties mâle et femelle étant situées selon ladite première direction,
la première partie mâle ayant un profil susceptible d'épouser celui de la deuxième partie femelle,
la deuxième partie mâle ayant un profil susceptible d'épouser celui de la première partie femelle.

2. Elément de construction (10) selon la revendication 1, **caractérisé en ce que** les première et deuxième parties mâles sont situées d'un même côté de ladite première direction et **en ce que** les première et deuxième parties femelles sont toutes deux situées à l'opposé dudit côté.

3. Elément de construction selon la revendication 2, **caractérisé en ce que** ladite surépaisseur (18) définit sur ladite première face:
- une première surface comprise entre son contour et celui de la première partie mâle, et
- une deuxième surface comprise entre son contour et celui de la première partie femelle, et
**en ce que** lesdites première et deuxième surfaces sont superposables l'une à l'autre.

4. Elément de construction selon l'une des revendications 1 à 3, **caractérisé en ce que** ladite première partie mâle est en forme de rainure en V et **en ce que** ladite deuxième partie femelle est en forme de pointe (30).

5. Elément de construction selon l'une des revendications 1 à 4, **caractérisé en ce que** ladite première partie femelle et ladite première partie mâle présentent chacune une assise (22, 26) et deux ailes obliques (24, 28), lesdites ailes étant parallèles deux à deux.

6. Elément de construction selon l'une des revendications 2 à 5, dans lequel la hauteur h entre le fond de la rainure (20) de la base et l'assise (26) de la surépaisseur (18), et la hauteur H entre l'assise (22) de la première partie mâle de la base et la pointe (30) de la surépaisseur (18), **caractérisé en ce que** la hauteur h est égale à la hauteur H.

7. Elément de construction selon l'une des revendications 1 à 6, **caractérisé en ce que** la première partie mâle et la première partie femelle sont biseautées.

8. Elément de construction selon l'une des revendications 1 à 7, **caractérisé en ce que** l'épaisseur de la surépaisseur (18) est supérieure à celle de la base (12).

9. Elément de construction selon l'une des revendications 5 à 8, dans lequel ladite base est munie d'une deuxième face opposée à la première face, **caractérisé en ce que** ladite deuxième face est dotée d'une première rainure (34) positionnée en vis-à-vis de la ligne virtuelle qui joint le fond de ladite rainure (20) et le sommet de ladite pointe (30) et d'une deuxième rainure (34) positionnée en vis-à-vis de l'assise (26) du côté supérieur de la structure (18).

10. Paire d'éléments de construction selon l'une des revendications 1 à 9.
